# EUROPEAN PATENT APPLICATION

(11) **EP 3 358 475 A1**
(43) Date of publication of application: **08.08.2018**
(21) Application number: 16850570.9
(22) Date of filing: 26.08.2016
(51) Int. Cl.: G06F 17/30

(54) **INFORMATION PROCESSING DEVICE, INFORMATION PROCESSING METHOD AND PROGRAM**

(30) Priority: 29.09.2015 JP 2015191186
(71) Applicant: Sony Corporation, Tokyo 108-0075 (JP)
(72) Inventor: NAGASAKA, Hideo, Tokyo 108-0075 (JP); YOSHIMURA, Shunji, Tokyo 108-0075 (JP)
(74) Representative: 2SPL Patentanwälte PartG mbB
(86) International application number: PCT/JP2016/003899
(87) International publication number: WO 2017/056387

(57) **Abstract**

An information processing apparatus according to an embodiment of the present technology includes a reception unit, a generation unit, a judgment unit, and a collection unit. The reception unit receives content. The generation unit analyzes the received content and generates one or more pieces of analysis information related to the content. The judgment unit judges an effectivity of each of the one or more pieces of generated analysis information. The collection unit collects content information related to the content on a network on a basis of the analysis information judged as effective by the judgment unit.

## Description

### Technical Field

The present technology relates to an information processing apparatus, an information processing method, and a program for collecting information on a network such as the Internet, for example.

### Background Art

From the past, there is known a technology of attaching metadata to content such as television programs and radio broadcast, and collecting information related to the content on the basis of the metadata via the Internet or the like. For example, Patent Literature 1 describes an information impartment device for imparting metadata of higher accuracy to content such as television programs.

In the information impartment device of Patent Literature 1, text data imparted to program content as metadata is acquired. Word data is extracted by a morphological analysis of the acquired text data. A search log or the like is referenced to calculate a generation time of the extracted word data, and time series data on the number of generated words is calculated on the basis of the calculated generation time.

The time series data on the number of generated words is decomposed into three components, that is, a tendency fluctuation component, a cycle fluctuation component, and an irregular fluctuation component. Of those, by using the irregular fluctuation component including a fluctuation caused by program broadcasting to evaluate word data, words influenced by the program broadcasting can be extracted with higher accuracy, and highly-accurate metadata can be imparted (paragraphs [0025] to [0028], [0040] to [0049] in specification of Patent Literature 1).

### Citation List

### Patent Literature

Patent Literature 1: Japanese Patent Application Laid-open No. 2015-49766

### Disclosure of Invention

### Technical Problem

In recent years, SNS (Social Networking Service) such as Twitter (registered trademark) has been widely used. For example, there is a demand for a technology capable of accurately collecting information related to program content and the like in real time from comments posted on SNS and the like.

In view of the circumstances as described above, the present technology aims at providing an information processing apparatus, an information processing method, and a program that are capable of highly accurately collecting information related to content in real time.

### Solution to Problem

For attaining the object described above, an information processing apparatus according to an embodiment of the present technology includes a reception unit, a generation unit, a judgment unit, and a collection unit.

The reception unit receives content.

The generation unit analyzes the received content and generates one or more pieces of analysis information related to the content.

The judgment unit judges an effectivity of each of the one or more pieces of generated analysis information.

The collection unit collects content information related to the content on a network on a basis of the analysis information judged as effective by the judgment unit.

In this information processing apparatus, analysis information related to content is generated with respect to the received content, and an effectivity thereof is judged. Then, content information on the network is collected on a basis of the analysis information judged as effective. Accordingly, content information can be collected highly accurately in real time.

The judgment unit may judge the effectivity on a basis of an expiration date set for each of the one or more pieces of generated analysis information.

Accordingly, it becomes possible to collect content information on a basis of highly-accurate analysis information conforming to contents of the content.

The judgment unit may judge an importance degree of each of the one or more pieces of generated analysis information. In this case, the collection unit may collect the content information on a basis of each of the importance degrees judged by the judgment unit.

Accordingly, content information can be collected highly accurately in accordance with contents of the content.

The content may be program content. In this case, the generation unit may generate the one or more pieces of analysis information by analyzing each of a plurality of types of information included in the program content. Further, the judgment unit may judge the importance degree of the analysis information on a basis of the type of information to be analyzed.

Accordingly, content information related to the program content can be collected highly accurately in real time.

The generation unit may generate one or more keywords related to the content on a basis of at least one of a telop, subtitle, audio, and image included in the program content. In this case, the collection unit may collect the content information on a basis of the keyword judged as effective by the judgment unit.

For example, content information can be collected highly accurately by performing a search using the keyword as a search word.

The information processing apparatus may further include a detection unit capable of detecting a scene switch in the program content. In this case, the judgment unit may invalidate the keyword in a case where the scene switch is detected before reaching an expiration date set for the keyword.

Accordingly, content information can be collected highly accurately in accordance with the scene switch.

The judgment unit may lower an importance degree of the keyword in a case where the scene switch is detected before reaching an expiration date set for the keyword.

Accordingly, content information can be collected highly accurately in accordance with the scene switch.

The content may be photographing content photographed by an image pickup apparatus. In this case, the generation unit may analyze the photographing content and extract one or more subjects included in the photographing content. Further, the collection unit may collect subject information related to a subject judged as effective by the judgment unit.

Accordingly, information related to a subject in the photographing content can be collected highly accurately in real time.

The judgment unit may judge a demand degree of the subject on a basis of a size of the subject in the photographing content.

Accordingly, information related to a subject that appears largely in the photographing content can be collected highly accurately in real time.

An information processing method according to an embodiment of the present technology is an information processing method executed by a computer, the method including receiving content.

The received content is analyzed, and one or more pieces of analysis information related to the content are generated.

An effectivity of each of the one or more pieces of generated analysis information is judged.

Content information related to the content on a network is collected on a basis of the analysis information judged as effective by the judgment unit.

A program according to an embodiment of the present technology causes a computer to execute the following steps.

The step of analyzing the received content and generating one or more pieces of analysis information related to the content.

The step of judging an effectivity of each of the one or more pieces of generated analysis information.

The step of collecting content information related to the content on a network on a basis of the analysis information judged as effective by the judgment unit. Advantageous Effects of Invention

As described above, according to the present technology, it becomes possible to collect information related to content highly accurately in real time. It should be noted that the effects described herein are not necessarily limited, and any effect described in the present disclosure may be obtained.

### Brief Description of Drawings

[Fig. 1] A schematic diagram showing a configuration example of an information collection system according to a first embodiment.
[Fig. 2] A block diagram showing a functional configuration example of an information collection server, user terminal, and SNS server shown in Fig. 1.
[Fig. 3] A flowchart showing an operation example of a keyword extraction unit shown in Fig. 2.
[Fig. 4] A flowchart showing an example of keyword and score storage processing.
[Fig. 5] A diagram showing a configuration example of an information display screen including a program-related comment and program-related information.
[Fig. 6] A schematic diagram showing a configuration example of a program-related comment posting screen.
[Fig. 7] A sequence diagram showing a processing example up to generation of the program-related comment posting screen.
[Fig. 8] A block diagram showing a functional configuration example of an information collection server, user terminal, and SNS server according to a second embodiment.

### Modes for Carrying Out the Invention

Hereinafter, embodiments of the present technology will be described with reference to the drawings.

### <First embodiment>

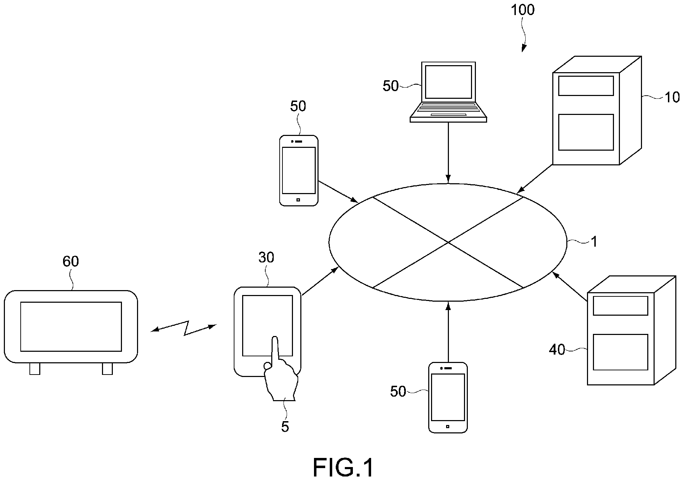

Fig. 1 is a schematic diagram showing a configuration example of an information collection system as an information processing apparatus according to this embodiment. An information collection system 100 includes an information collection server 10, a user terminal 30, an SNS server 40, and SNS user terminals 50. These apparatuses are mutually communicable via a network 1.

Typically, a WAN (Wide Area Network) such as the Internet is used as the network 1, but a LAN (Local Area Network) such as an intranet may be used instead. In addition, a protocol for structuring the network 1 is not limited.

The information collection server 10 receives, for example, program content of television broadcast or the like and collects content information related to the program content via the network 1. The collected content information is transmitted to the user terminal 30. The information collection server 10 typically provides collection and transmission of content information as a Web service, though not limited thereto. The information collection server functions as the information processing apparatus according to this embodiment.

The user terminal 30 is a terminal used by a user 5 who uses the information collection system 100 according to this embodiment. For example, a plurality of pieces of collected content information are displayed via a Web browser stored in the user terminal 30.

The SNS server 40 provides a communication service that allows unspecified number of service users to post comments via the network 1. The communication service according to the present technology includes various SNSs such as Twitter (registered trademark). Hereinafter, the communication service will be described while referring to it as SNS.

The SNS user terminals 50 are terminals used by SNS users using the SNS according to this embodiment. For example, the SNS user acquires an SNS account using the SNS user terminal 50. By logging in using the SNS account, the SNS can be used.

It should be noted that in this embodiment, it is assumed that the user 5 of the information collection system 500 is also capable of using the SNS by using the user terminal 30. In other words, the user 5 has already acquired the SNS account using the user terminal 30. Of course, even in a case where the SNS account is not acquired, it is possible to use the information collection system 100.

As shown in Fig. 1, the user terminal 30 is communicably connected to a television apparatus 60 that broadcasts program content. Both apparatuses are connected by near-field wireless communication such as Bluetooth (registered trademark) or wireless LAN communication such as WiFi.

The information collection server 10, the user terminal 30, the SNS server 40, and the SNS user terminals 50 are structured by various computers such as a PC (Personal Computer), a smartphone, and a tablet terminal. In other words, each apparatus includes hardware requisite for configuring a computer, such as a CPU, a ROM, a RAM, and an HDD.

Information processing carried out by the respective apparatuses is realized by software stored in the ROM, HDD, and the like and hardware resources of the respective apparatuses cooperating with one another. Specifically, the information processing is realized by the CPU loading a program configuring software stored in the ROM or the like to the RAM and executing it. The program is installed in each apparatus via, for example, various recording media. Alternatively, the program may be installed in each apparatus via the Internet or the like.

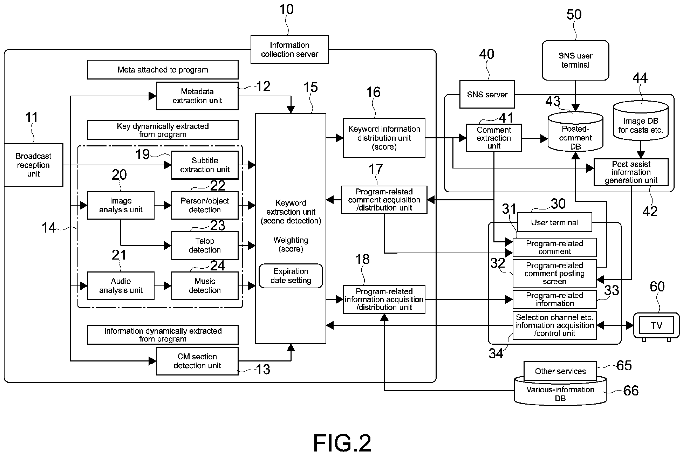

Fig. 2 is a block diagram showing a functional configuration example of the information collection server 10, the user terminal 30, and the SNS server 40. Each of the functional blocks shown in Fig. 2 is configured by the CPU of each apparatus executing a predetermined program. It should be noted that dedicated hardware may be used as appropriate for realizing the respective functional blocks.

The information collection server 10 includes a broadcast reception unit 11, a metadata extraction unit 12, a CM section detection unit 13, a program analysis unit 14, a keyword extraction unit 15, a keyword information distribution unit 16, a program-related comment acquisition/distribution unit 17, and a program-related information acquisition/distribution unit 18.

The broadcast reception unit 11 receives program content distributed from broadcast stations for terrestrial digital television broadcasting, CS digital broadcasting, BS digital broadcasting, and the like, for example. For example, metadata related to program content, that has been generated by a broadcast station, is attached to the program content. The broadcast reception unit 11 is also capable of receiving an electronic program guide (EPG: Electronic Program Guide) from the broadcast stations.

The metadata extraction unit 12 extracts metadata attached to program content. Metadata includes, for example, a channel, title, casts, broadcasting time, general outline of broadcast content, and the like of the program content. Further, a time schedule from a start to end of the program content may be attached as the metadata so that a switch of each scene and a position (time) of a CM section and the like can be extracted.

The CM section detection unit 13 detects a position of a CM section in program content. The CM section is detected on the basis of, for example, a difference between main video data and CM video data. Alternatively, the CM section may be detected on the basis of a change point of a video or music, presence or absence of a watermark, and the like. Other arbitrary technologies may be used as appropriate. It should be noted that in a case where the position of a CM section is attached as metadata as described above, the metadata is used.

The program analysis unit 14 analyzes various types of information included in program content. In this embodiment, the program analysis unit 14 includes a subtitle extraction unit 19, an image analysis unit 20, and an audio analysis unit 21. The subtitle extraction unit 19 extracts subtitles in the program content.

The image analysis unit 20 detects a person/object 22 such as a cast and an object being featured, that are included in program content. Further, the image analysis unit 20 detects a telop 23 displayed in each scene in the program content. A method of detecting a person/object and telop is not limited, and an arbitrary technology may be used.

The audio analysis unit 21 detects music 24 played or sung by a performer and the like in program content. Further, the audio analysis unit 21 detects music 24 broadcasted as a BGM of each scene. The music detection may be executed by an arbitrary technology. In addition to the music, casts who make comments and the like may be specified by the audio analysis unit 21.

The keyword extraction unit 15 extracts one or more keywords as one or more pieces of analysis information related to program content, on the basis of an analysis result output from the program analysis unit 14. Further, the keyword extraction unit 15 judges an effectivity of each of the one or more keywords. In this embodiment, an expiration date is set for each of the keywords, and the effectivity is judged on the basis of the expiration date.

The expiration date is typically a time after an elapse of a predetermined period since a time when a keyword has been generated. Specifically, in a case where a predetermined period has elapsed after generation of a keyword, the keyword is judged as invalid. Alternatively, a time when a predetermined condition is satisfied, such as a switch to a CM section and a switch of scenes, may be set as the expiration date.

It should be noted that the detection of a scene switch is executed by the keyword extraction unit 15 on the basis of an analysis result from the program analysis unit 14. For example, a timing at which a detected person/object 22, the telop 23, or the like is switched drastically is detected as the scene switch. It should be noted that an arbitrary technology may be used for the scene detection, or metadata extracted by the metadata extraction unit 12 may be used instead.

Further, the keyword extraction unit 15 judges an importance degree of a keyword judged as effective. Specifically, the judgment is made on how important each keyword is, and weighting is executed in accordance with the judged importance degree. By this weighting, a score is added to each keyword.

The keyword information distribution unit 16 distributes the keyword, that has been extracted by the keyword extraction unit 15 and has been judged as effective, to the SNS server 40. At this time, distribution is performed while including the importance degree, that is, the score of each keyword.

In the SNS server 40, the program-related comment acquisition/distribution unit 17 acquires program-related comments that have been collected on the basis of the keyword judged as effective. In addition, the program-related comment acquisition/distribution unit 17 is also capable of distributing the acquired program-related comments to the user terminal 30. The program-related comments are included in content information according to this embodiment. The keyword information distribution unit 16 and the program-related comment acquisition/distribution unit 17 realize a collection unit according to this embodiment.

The program-related information acquisition/distribution unit 18 acquires program-related information related to program content from various types of information that can be provided by other services 65 on the network 1. These pieces of information are acquired on the basis of the keyword judged as effective. Without being limited to this, the program-related information may also be acquired as appropriate on the basis of metadata and the like.

Information included in a various-information DB (database) 66, that can be provided by the other services 65, includes, for example, a posted comment, an image, a moving image, music, and various other types of information on other SNSs. The program-related comment acquired from the SNS server 40 shown in Fig. 2 and the program-related information acquired from the various-information DB correspond to content information on the network 1.

In this embodiment, the program analysis unit 14 and the keyword extraction unit 15 function as a generation unit that analyzes the received content and generates one or more pieces of analysis information related to the content. Further, the keyword extraction unit 15 also functions as a judgment unit and a detection unit in this embodiment.

The SNS server 40 includes a comment extraction unit 41, a post assist information generation unit 42, a posted-comment DB 43, and an image DB 44. The comment extraction unit 41 extracts program-related comments from the posted-comment DB 43 on the basis of the keyword distributed from the information collection server 10. Typically, a search is performed using the keyword as a search word, and comments including the search word are extracted. It should be noted that the posted-comment DB 43 stores comments posted via the SNS user terminal 50.

The comment extraction unit 41 transmits the plurality of extracted program-related comments to the user terminal 30 and the program-related comment acquisition/distribution unit 17 of the information collection server 10. For example, in a case where the user terminal 30 has logged in to the SNS account, the program-related comments are transmitted from the SNS server 40 to the user terminal 10. On the other hand, in a state where the user has not logged in, the program-related comments are transmitted from the information collection server 10, though of course not limited to this.

In the image DB 44, images related to program content of respective channels are stored. The images related to program content (hereinafter referred to as program content images) include various images related to program content, such as a logo mark of a broadcast station, a logo mark of program content, an image of casts and the like, and an image of performers playing BGM music, for example. The program content images are typically distributed from respective broadcast stations.

The post assist information generation unit 42 generates assist information for posting a comment by the user terminal 30 using the SNS. In this embodiment, assist information used for posting a comment on program content being viewed by the user 5 is generated.

The user terminal 30 includes a display (not shown) that uses liquid crystal, EL (ElectroLuminescence), or the like, for example, and is capable of displaying various images on the display. In this embodiment, a program-related comment 31, a program-related comment posting screen 32, and program-related information 33 are respectively displayed.

A selection channel etc. information acquisition/control unit 34 is connected to the television apparatus 60 and acquires various types of information including, for example, channel information of program content currently being broadcasted. Further, the selection channel etc. information acquisition/control unit 34 is capable of controlling an operation of the television apparatus, such as a channel switch. As a result, the user terminal 30 can be used as a remote controller.

### [Method of collecting program-related comment]

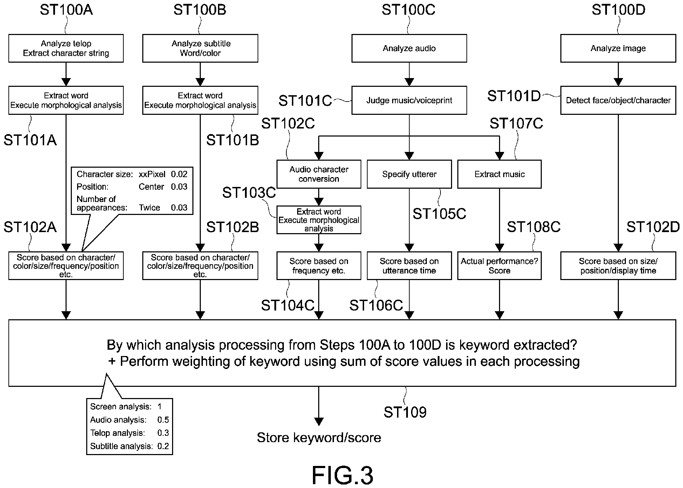

Fig. 3 is a flowchart showing an operation example of the keyword extraction unit 16. A telop analysis (Step 100A), a subtitle analysis (Step 100B), an audio analysis (Step 100C), and an image analysis (Step 100D) are executed by the keyword extraction unit 16 on the basis of the analysis result obtained by the program analysis unit 14. These steps can be executed in parallel.

In the telop analysis, a character string is extracted from a telop displayed during a program, and meaningful words are extracted by a morphological analysis or the like, for example (Step 101A). An importance degree is judged and a score is added for each of the extracted words. For example, the score is determined on the basis of the following parameters (Step 102A). Of course, the present technology is not limited to these.

Word content ... Content having stronger meaning is given higher score
Character size (Pixel) of word ... Larger size is given higher score
Display color of word... More-conspicuous color such as red is given higher score
Appearance position on screen ... The closer it is to conspicuous position (center of screen etc.), the higher the score
Appearance frequency ... The higher the number of appearances, the higher the score
It should be noted that a specific numerical value calculation method is not limited, and the numerical values may be set as appropriate.

In the subtitle analysis, words, display colors thereof, and the like are detected from subtitles displayed during a program. First, words are extracted by a morphological analysis or the like, and a score is added to each word on the basis of the parameters and the like (Steps 101B and 102B).

In the audio analysis, music being played and a voiceprint of a comment of a cast or the like are detected (Step 101C). Lyrics and comments of a song being sung are converted into characters so that words are extracted (Steps 102C and 103C). A score is added to each word on the basis of the appearance frequencies of the extracted words and the like (Step 104C).

Further, on the basis of the voiceprint judgment, utterers of the comments or the like are specified (Step 105C). A score is given to each of the specified utterers on the basis of utterance times or the like (Step 106C). It should be noted that in this case, the extracted keywords are typically names of the utterers.

Further, the music being played is extracted (Step 107C). A score is given to each music piece on the basis of whether the music performance is an actual performance or reproduction of a CD sound source or the like (e.g., in the case of BGM etc.) (Step 108C). It should be noted that the extracted keywords are typically music titles.

In the image analysis, faces, objects, characters, and the like are detected (Step 101D). A score is given to the detected faces, objects, and the like on the basis of a size, display position, display time, and the like of an image (partial image) including the faces, objects, and the like (Step 102D).

The keywords extracted herein are typically names of people, objects, and the like in the partial image. However, in a case where an image search or the like can be made with respect to a plurality of comments or the like in the SNS server 40, the partial image may be used as it is as one or more pieces of analysis information.

The keyword extraction unit 15 further executes weighting on the keywords extracted by the respective analysis processing from Steps 100A to 100D (Step 109). First, a judgment is made on which analysis processing from Steps 100A to 100D the keyword is extracted by, and a score is given on the basis of the judgment result. For example, the weighting is performed such that that the numerical values of the scores become image analysis > audio analysis > telop analysis > subtitle analysis. Of course, the present technology is not limited to this.

A sum of the score given in accordance with the type of the analysis processing and the score given by each processing is calculated as the score of each keyword.

In this way, in this embodiment, by analyzing each of the telop, subtitle, audio, and image which are a plurality of types of information included in program content, one or more keywords are generated as one or more pieces of analysis information. Then, an importance degree of each keyword is judged and a score is given on the basis of the type of information to be analyzed. As a result, it is possible to highly-accurately collect program-related comments and the like in real time in accordance with contents of the program content.

Further, as described above, parameters are used as appropriate so as to perform fine weighting in each analysis processing. Accordingly, it becomes possible to collect program-related comments and the like with higher accuracy.

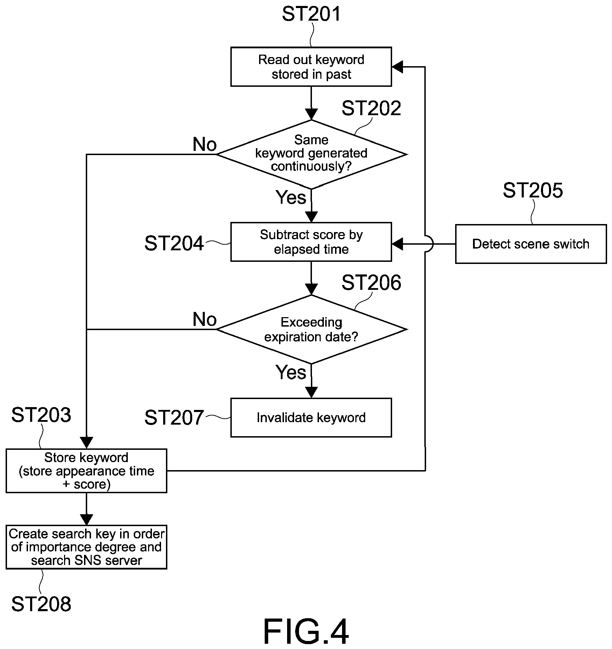

Fig. 4 is a flowchart showing an example of keyword and score storage processing. The storage processing is executed for each of the keywords generated in Step 109 of Fig. 3. First, all of the previously-stored keywords are read out (Step 201).

On the basis of the read keywords, a judgment is made on whether the keyword generated this time is a keyword that has been continuously generated (Step 202). In other words, a judgment is made on whether the same keyword has been continuously generated in each of the analysis processing shown in Fig. 3. It should be noted that typically, this corresponds to a case where the same keyword is successively generated by the same analysis processing. Instead of this, a case where the same keyword is eventually generated in different analysis processing may be regarded as the case where the keyword is generated continuously.

When the keyword is not continuously generated (No in Step 202), the keyword and score are stored (Step 203). Further, an appearance time of the keyword is also stored. The appearance time corresponds to, for example, a numerical value obtained by multiplying an interval at which the content analysis processing is carried out (e.g., every one second) by the number of continuously-generated times. In this case, since the keyword is generated for the first time, the interval time for 0 times, that is, 0 second is stored.

In a case where the keyword is continuously generated (Yes in Step 202), an interval time for one time is added to the appearance time that has been stored in the past, and thus an appearance time up to the current generation, that is, an elapsed time since the first generation is calculated. Then, in accordance with the elapsed time, the score calculated in Step 109 of Fig. 3 is subtracted (Step 204).

Normally, program content includes a plurality of scenes, and the scenes are sequentially switched and broadcasted. When scenes change, it is desirable for a keyword corresponding to a new scene to be extracted. On the other hand, a keyword generated after the scene switch is highly likely a fresh keyword corresponding to the new scene, that is, a keyword more suited for contents of the content.

On the basis of such a viewpoint, a score of a keyword that has been continuously generated to some extent is subtracted so as to decrease in proportion to a length of a duration time. Further, when a scene switch is detected while a keyword is being continuously generated, that is, before reaching the expiration date (Step 205), the score is further subtracted.

Further subtraction of a score may be executed in accordance with a detection of a switch to CMs in addition to or instead of the scene switch. This is based on a consideration that the scene switch is often performed across CMs. It should be noted that a specific score subtraction value or the like may be set as appropriate.

Next, a judgment is made on whether the elapsed time of the keyword has exceeded the expiration date, and the keyword whose expiration date has passed is invalidated (Yes in Step 206 to Step 207). A keyword whose expiration date has not passed is stored together with the subtracted score and appearance time (elapsed time) (No in Step 206 to Step 203). In this way, by performing the score subtraction according to the elapsed time and the judgment on the keyword effectivity according to the expiration date, it becomes possible to highly accurately collect information in real time in accordance with the scene switch.

It should be noted that the keyword may be invalidated at a time point the scene switch is detected. In other words, the keyword may be reset every time a scene is switched, and a keyword may be extracted again.

Based on the stored keywords, search keys are created in the order of importance degrees, and search processing with respect to the SNS server is executed (Step 208). Specifically, the keywords and scores are transmitted to the SNS server 40, and the comment extraction unit 41 of the SNS server 40 extracts program-related comments reflecting the importance degrees.

Regarding the extraction reflecting the importance degrees, the extraction is typically executed such that an upper limit of the number of extractable comments is set and a ratio of the number of program-related comments related to the respective keywords becomes substantially equal to a ratio of scores representing the importance degrees of the respective keywords. At this time, a threshold value may be set for the score so that the program-related comments are extracted using only the keywords having scores higher than the threshold value. It should be noted that the number of extractable comments is set on the basis of, for example, the number of comments that can be displayed on a display of the user terminal 30, or the like.

For example, it is assumed that 4 keywords are selected, and a ratio of scores thereof is 5:3:2:1. It is also assumed that the number of extractable comments is 55. In this case, 25, 15, 10, and 5 comments are extracted as program-related comments related to the keywords in a descending order of the scores. These program-related comments are extracted, for example, in time series. Of course, other methods may be used as the method of extracting comments reflecting importance degrees.

Further, the program-related information acquisition/distribution unit 18 reflects the importance degrees of the keywords to acquire various types of program-related information from the various-information DB 66 of the other services 65. For example, in a case where a costume of a cast is extracted as a keyword, a location of a shop where the costume is sold, a price of the costume, and the like are acquired. Various other types of information can also be acquired.

The extracted program-related comments are transmitted to the user terminal 30 and displayed on the display. Similarly, acquired program-related information is also displayed on the user terminal 30 and displayed on the display.

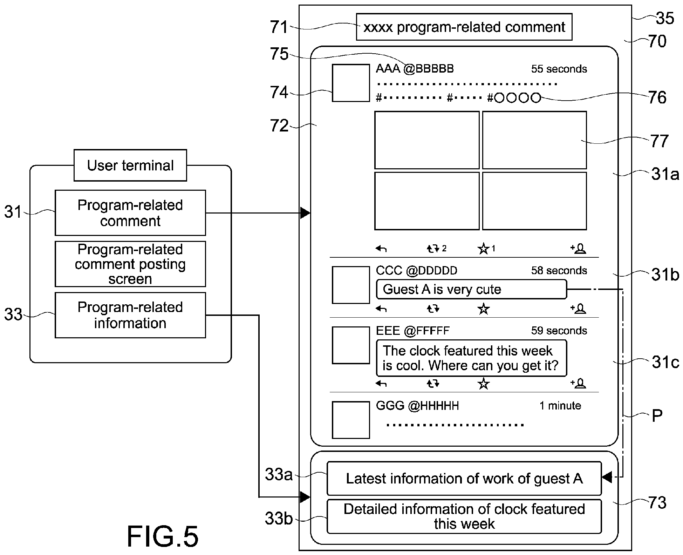

Fig. 5 is a diagram showing a configuration example of an information display screen including the program-related comments 31 and the program-related information 33. An information display screen 70 displayed on a display 35 of the user terminal 30 includes a program title display portion 71, a program-related comment display portion 72, and a program-related information display portion 73. In the program title display portion 71, a title of program content as a target of the information collection is displayed.

The program-related comments 31 extracted on the basis of the keywords are displayed in the program-related comment display portion 72. Each of the comments 31 includes an account image 74, a user/account name 75, a comment text 76, and a posted image 77. A link to another webpage or the like can also be posted as the comment text 76.

In the example shown in Fig. 5, a comment 31a acquired using a program title as a keyword, a comment 31b acquired using a name of a guest A as a keyword, and a comment 31c acquired using a featured clock as a keyword are displayed. In the comments 31, color coding or the like may be performed so that the keyword portion can be recognized.

In the program-related information display portion 73, the program-related information 33 acquired on the basis of the keyword is displayed. In the example shown in Fig. 5, information 33a of a work of the guest A, that has been acquired using the name of the guest A as a keyword, is displayed. Further, detailed information 33b of the featured clock, that has been acquired using the featured clock as a keyword, is displayed. When each program-related information 33 is selected by the user 5, the page is switched, and details of each program-related information 33 are displayed on the display 35.

It should be noted that as shown in Fig. 5, information related to the program-related comment 31 may be displayed as the program-related information 33. Further, a GUI with which a fact that the pieces of information are related to each other can be visually recognized, like an arrow P in a broken line, may be displayed. As a result, the user 5 can collect information more deeply regarding the program content.

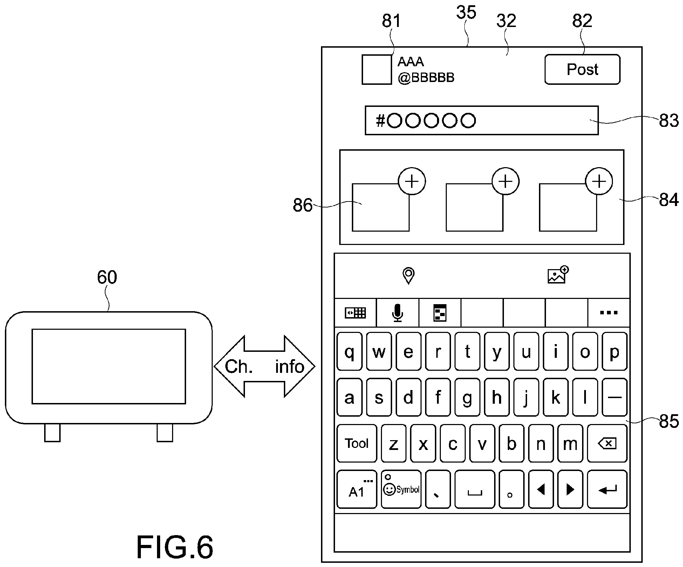

Fig. 6 is a schematic diagram showing a configuration example of the program-related comment posting screen 32. For example, a case where the user 5 posts, while watching program content currently being broadcasted by the television apparatus 60, a program-related comment related to the program content will be discussed.

The user 5 logs in on the SNS and inputs an operation to the effect that a post will be made on program content. For example, a button or the like for making an input to that effect may be prepared in the SNS. Alternatively, the user 5 inputs a hashtag (e.g., title) unique to the program content in a comment input column. An operation to the effect that a post will be made on the program may be detected in this way.

When an operation to the effect that a post will be made on the program content is input, the program-related comment posting screen 32 (hereinafter, simply referred to as posting screen 32) shown in Fig. 6 is displayed. The posting screen 32 includes an account image display portion 81, a post button 82, a comment input portion 83, a program content image display portion 84, and a keyboard portion 85. In the account image display portion 81, an account image and a user/account name are displayed. The post button 82 is selected when posting a comment.

A comment text of the user 5 is input to the comment input portion 83. By operating the keyboard portion 85, the user 5 can freely create and input a comment related to the program. It should be noted that as shown in Fig. 6, a hashtag related to the program content may be automatically input to the comment input portion 83.

In the program content image display portion 84, a program content image 86 stored in the image DB 44 of the SNS server 40 shown in Fig. 2 is displayed. When an addition mark at an upper right of the program content image 86 is selected, the selected program content image is displayed in the comment input portion 83, to thus be put to a postable state. The program content image 86 is read out by the post assist information generation unit 42 as appropriate and transmitted to the user terminal 30.

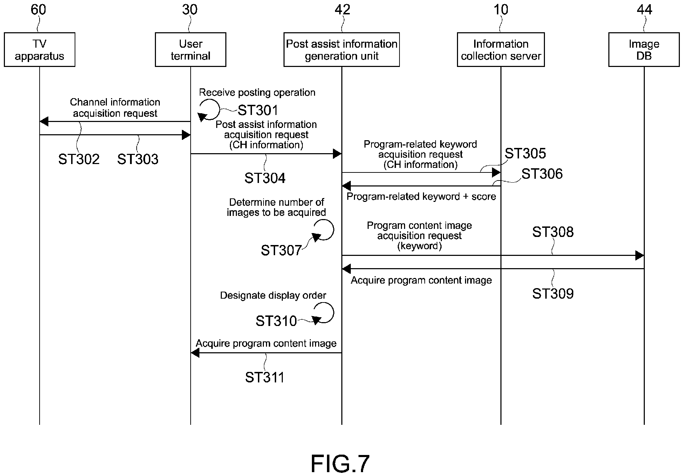

Fig. 7 is a sequence diagram showing a processing example up to generation of the program-related comment posting screen. First, the user terminal 30 receives an operation of posting a program-related comment from the user 5 (Step 301). The selection channel etc. information acquisition/control unit 34 shown in Fig. 2 transmits a channel information acquisition request of program content currently being broadcasted to the television apparatus 60 (Step 302). In response to the request, channel information is transmitted to the user terminal 30 (Step 303).

An acquisition request for post assist information including the channel information is transmitted from the user terminal 30 to the post assist information generation unit 42 (Step 304). An acquisition request for a program-related keyword related to a program content corresponding to the channel information, that includes the channel information, is transmitted from the post assist information generation unit 42 to the information collection server 10 (Step 305).

The information collection server 10 executes the analysis, effectivity judgment, and weighting shown in Figs. 3 and 4 on the program content corresponding to the channel information. Then, one or more keywords judged as effective are transmitted to the post assist information generation unit 42 as program-related keywords. At this time, a score attached to each keyword is also transmitted (Step 306).

It should be noted that the processing shown in Figs. 3 and 4 carried out by the information processing server 10 may be periodically executed on the program content of the respective channels. As a result, it becomes possible to shorten a processing time and acquire fresh keywords.

The post assist information generation unit 42 determines the number of program content images to be acquired (Step 307). Typically, the number images to be acquired is set as appropriate on the basis of the number of images that can be displayed in the program content image display portion 84 shown in Fig. 6.

An acquisition request for a program content image based on the program-related keywords is transmitted from the post assist information generation unit 42 to the image DB 44 (Step 308). Program content images are acquired on the basis of the program-related keywords (Step 309). A display order of the acquired program content images is designated on the basis of the scores of the program-related keywords (Step 310). Typically, the display order of the program content images is designated so as to become the order of scores.

The program content images are transmitted from the post assist information generation unit 42 to the user terminal 30 together with information on the display order thereof. As a result, the user terminal 30 can acquire the program content images as post assist information (Step 311). The user terminal 30 displays the received program content images in the program content image display portion 84 in the designated display order.

In this way, the program content images 86 conforming to the content of the current program content are displayed as the post assist information in the program content image posting screen 84. Accordingly, the user 5 can create and post a very interesting comment with more content regarding the program content. Further, also from the viewpoint of broadcast stations, it becomes possible to effectively spread information of program content being broadcasted using the SNS.

As described above, in the information collection system 100 and the information collection server 10 according to this embodiment, keywords related to content are generated in real time, and effectivities thereof are judged. Content information on the network 1 is collected on the basis of the keywords judged as effective. Accordingly, it becomes possible to highly accurately collect content information in real time.

As a method of detecting SNS posted comments related to program content, and the like, there is a method of using hashtags uniquely allocated to broadcast stations and television programs. Further, extracting keywords of program names, casts, and the like from program information of a broadcast program and using them is also conceivable. However, since broadcast contents change every second in real time in news programs and the like, it has been extremely difficult to highly accurately collect posted comments and the like conforming to broadcast contents by the method described above.

Since the information collection system 100 analyzes broadcast contents in real time and extracts keywords, it is possible to highly accurately collect posted comments and the like conforming to the broadcast contents in real time also with respect to the news programs and the like described above.

It should be noted that in this embodiment, the case where the general user 5 viewing program content and using the SNS uses the information collection system 100 has been described as an example. A usage form of the information collection system 100 is not limited to this, and the information collection system 100 can be effectively used for various purposes, such as a survey of public reactions to program content by broadcast stations or the like and an investigation by companies or the like regarding reactions to own products broadcasted on televisions.

### <Second embodiment>

An information collection system according to a second embodiment of the present technology will be described. In descriptions below, descriptions on configurations and operations similar to those of the information collection system 100 described in the above embodiment will be omitted or simplified.

In this information collection system, video images and audio acquired by an in-vehicle camera (image pickup apparatus) mounted on a vehicle are analyzed, and one or more pieces of analysis information are generated. An effectivity and importance degree of the one or more pieces of analysis information are judged, and SNS posted comments and information of other services (subject information) related to a subject captured by the in-vehicle camera are acquired on the basis of the analysis information judged to be effective. By viewing the acquired information via the user terminal, the user can enjoy the drive even more. Further, audio guidance or the like may be executed on the basis of the acquired information. As a result, it becomes possible to experience a very meaningful sightseeing tour while further enjoying the landscape.

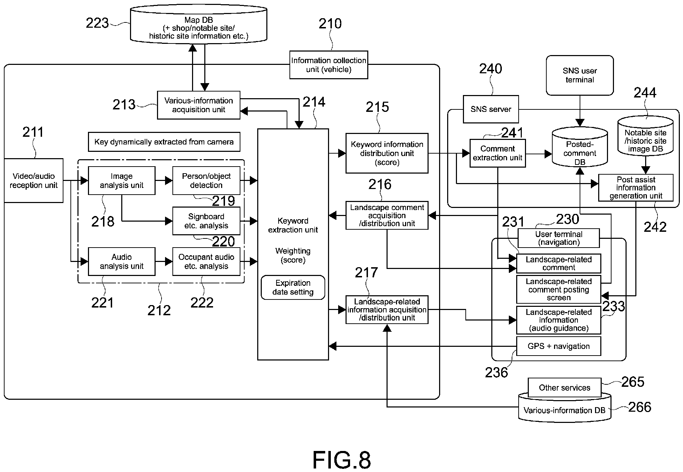

Fig. 8 is a block diagram showing a functional configuration example of an information collection unit 210, a user terminal 230, and an SNS server 240 according to this embodiment. The information collection unit 210 is a block capable of collecting content information on a network and is mounted on a vehicle. The information collection unit 210 is realized by hardware such as a CPU and a ROM cooperating with software such as an application program, and the like, for example. In other words, in this embodiment, the information processing apparatus according to the present technology is integrated with a vehicle.

The information collection unit 210 includes a video/audio reception unit 211, a landscape analysis unit 212, a various-information acquisition unit 213, a keyword extraction unit 214, a keyword information distribution unit 215, a landscape comment acquisition/distribution unit 216, and a landscape-related information acquisition/distribution unit 217.

The video/audio reception unit 211 receives a video and audio (hereinafter, referred to as photographing content) from an in-vehicle camera (not shown). The landscape analysis unit 212 analyzes various types of information included in the photographing content. In this embodiment, a subject in the photographing content, specifically, a person/object 219, is detected by an image analysis unit 218, and a signboard 220 or the like is analyzed. Further, an audio analysis unit 221 analyzes audio etc. 222 of an occupant aboard the vehicle.

The keyword extraction unit 214 extracts one or more keywords related to the photographing content on the basis of the analysis result output from the landscape analysis unit 212. For example, names of notable sites, historic sites, shops, and the like, such as a castle and a shrine in photographing content, for example, are extracted. Alternatively, names of notable sites and areas or a name of a row of cherry blossom trees and the like may be extracted from a conversation of the occupants. Furthermore, a name of a float related to a famous festival and the like may be extracted.

The keyword extraction unit 214 judges an effectivity of an extracted keyword. For example, from a viewpoint that a landscape photographed by the in-vehicle camera changes as appropriate, the effectivity is judged using a predetermined period as an expiration date. Alternatively, in a case where a size of a subject in an image (frame image) photographed in real time is smaller than a predetermined threshold value, a keyword related to the subject is invalidated.

Further, the keyword extraction unit judges an importance degree of the keyword judged as effective and sets a score. The score is calculated as appropriate such that the importance degree of the subject mainly photographed in real time becomes high. For example, as the size of the subject in the image becomes larger, a higher score is given.

Further, map information is acquired from a map DB 223 shown in Fig. 8, and buildings and the like near a current position of the vehicle calculated using a GPS or the like are detected. Then, a high score is given to the buildings and the like. It should be noted that in the example shown in Fig. 8, a GPS and navigation function 236 is mounted on the user terminal 30, and GPS information is transmitted from the user terminal 30 to the information collection unit 210. Of course, the present technology is not limited to this.

Further, in the conversation of the occupants, a high score is given to a keyword that appears frequently. Scores may also be given by various other methods.

Further, for a keyword extracted continuously, a score may be subtracted in accordance with an elapsed time since the extraction. Moreover, in a case where the landscape to be photographed is switched, a subtraction rate may be increased. Alternatively, the keyword may be reset in accordance with a switch of the landscape.

The extracted keyword and score are transmitted to the SNS server 240, and landscape-related comments 231 related to the landscape are collected by a comment extraction unit 241. The landscape-related comments are collected such that 231, importance degrees (scores) are reflected. The collected landscape-related comments 231 are displayed on a display (not shown) of the user terminal 230.

Landscape-related information 233 on the landscape is acquired from a various-information DB 266 of another service 265 on the basis of the keyword and score. For example, a history of a notable site, information on a person related to the notable site, beautiful images of the notable sight or historic sites, and the like are acquired. The landscape-related information 233 is displayed on the display of the user terminal 230. Alternatively, audio guidance is performed on the basis of the landscape-related information 233. As a result, the user can highly accurately physically experience subject information conforming to the surrounding landscape in real time.

In a case where the user wishes to post a comment on the landscape that can be currently seen from the vehicle, a keyword extracted on the basis of the photographing content is transmitted to the SNS server 240 together with the score. On the basis of the keyword, images of notable sites, historic sites, and the like are read out from the image DB 244 of the SNS server 240. The read images are transmitted to the user terminal 230 by a post assist information generation unit 242 as post assist information.

Accordingly, the user can post interesting comments of profound contents with respect to the landscape that is currently seen, using beautiful images and the like.

An internal content of the audio guidance may be adjustable on the basis of movement information on traffic jams and the like. Further, control may be performed such that guided contents are stored and the contents that have been guided once are not introduced anymore. Accordingly, it becomes possible to prevent an overlap of guidance. Furthermore, it is also possible to detect a direction of the line of sight of the occupant on the basis of a video of the in-vehicle camera and execute the extraction of keywords, setting of scores, and the like on the basis of the detection result.

### <Other embodiments>

The present technology is not limited to the embodiments described above, and various other embodiments can also be realized.

A content type is not limited, and the present technology may also be applied to other content of radio broadcast, Internet television, and the like. In addition, without being limited to the in-vehicle camera, the present technology is also applicable to content photographed by a video camera carried by a user and content photographed by a camera mounted on a glasses-type wearable computer (head-mounted display: HMD) .

How to judge an importance degree of analysis information generated by analyzing content is not limited, and the importance degree only needs to be set as appropriate using arbitrary parameters and the like. For example, the importance degree may be determined on the basis of metadata attached in advance to program content, or the like. For example, it is also possible to perform processing of setting an importance degree high for analysis information on a main cast included in the metadata, and the like. Further, in a case where content of the in-vehicle camera is to be analyzed, the importance degree may be judged on the basis of map information or navigation information (path information etc.).

For example, the number of comments and the like related to the keyword judged as effective may be fed back to the importance degree (score) of the keyword. For example, it is assumed that a significantly large number of SNS users have responded to a specific person or object in program content and posted comments. The information processing server raises the importance degree of the related keyword in accordance with the number of comments. Accordingly, it becomes possible to collect highly-accurate information reflecting the reactions of other SNS users.

In a case where analysis information is extracted on the basis of subtitles included in program content, the subtitles are sometimes displayed with a delay from an actual scene. Therefore, analysis information only needs to be extracted in consideration of these delay times. In some cases, the delay time differs depending on a genre of a program content, and a highly-accurate information collection becomes possible by taking this point into consideration.

A logo mark of a program, a telop for promotion of a program, and the like may be constantly displayed during broadcasting. Therefore, these pieces of information may be identified so that a score is subtracted for analysis information extracted from these pieces of information.

Information search algorithms such as Tf-idf (TF: Term Frequency) (IDF: Inverse Document Frequency) and LSI (Latent Semantic Indexing) may be used as appropriate as the technology for detecting keywords.

The information collection system according to the present technology may be applied to a CM itself broadcasted in the CM section. Specifically, one or more pieces of analysis information are generated by analyzing a CM content, and an effectivity and importance degree thereof are judged. Post comments and content information related to one or more pieces of analysis information are collected on the basis of the effectivity and importance degree. Accordingly, it becomes possible to highly accurately collect information on popular CMs, popular products, and the like in real time.

Images or the like posted by SNS users may be stored in the image DB of the SNS server. Then, those images may be transmitted to the user terminal as post assist information. Accordingly, it becomes possible for the SNS users to post comments using images of scenes that the users are interested in, and the like.

In the descriptions above, the image stored in the image DB of the SNS server corresponds to one or more pieces of related information related to content, and the related information is transmitted to the user terminal as assist information. However, as the assist information, other data such as text data related to content may also be used, for example.

Various types of information to be analyzed in real time from content, such as an image, audio, and GPS information, may be used as the analysis information generated for collecting content information, without being limited to the keywords described above.

The function of the information collection server 10 shown in Fig. 1 may be mounted on the user terminal 30 as an information collection unit.

At least two of the feature portions according to the present technology described above can be combined. In other words, various feature portions described in the respective embodiments may be arbitrarily combined without distinguishing the embodiments from one another. Moreover, the various effects described above are mere examples and should not be limited thereto, and other effects may also be exerted.

It should be noted that the present technology can also take the following configurations.
(1) An information processing apparatus, including:
   a reception unit that receives content;
   a generation unit that analyzes the received content and generates one or more pieces of analysis information related to the content;
   a judgment unit that judges an effectivity of each of the one or more pieces of generated analysis information; and
   a collection unit that collects content information related to the content on a network on a basis of the analysis information judged as effective by the judgment unit.
(2) The information processing apparatus according to (1), in which
   the judgment unit judges the effectivity on a basis of an expiration date set for each of the one or more pieces of generated analysis information.
(3) The information processing apparatus according to (1) or (2), in which
   the judgment unit judges an importance degree of each of the one or more pieces of generated analysis information, and
   the collection unit collects the content information on a basis of each of the importance degrees judged by the judgment unit.
(4) The information processing apparatus according to (3), in which
   the content is program content,
   the generation unit generates the one or more pieces of analysis information by analyzing each of a plurality of types of information included in the program content, and
   the judgment unit judges the importance degree of the analysis information on a basis of the type of information to be analyzed.
(5) The information processing apparatus according to (4), in which
   the generation unit generates one or more keywords related to the content on a basis of at least one of a telop, subtitle, audio, and image included in the program content, and
   the collection unit collects the content information on a basis of the keyword judged as effective by the judgment unit.
(6) The information processing apparatus according to (5), further including
   a detection unit capable of detecting a scene switch in the program content,
   in which the judgment unit invalidates the keyword in a case where the scene switch is detected before reaching an expiration date set for the keyword.
(7) The information processing apparatus according to (5), further including
   a detection unit capable of detecting a scene switch included in the program content,
   in which the judgment unit lowers an importance degree of the keyword in a case where the scene switch is detected before reaching an expiration date set for the keyword.
(8) The information processing apparatus according to any one of (1) to (3), in which
   the content is photographing content photographed by an image pickup apparatus,
   the generation unit analyzes the photographing content and extracts one or more subjects included in the photographing content, and
   the collection unit collects subject information related to a subject judged as effective by the judgment unit.
(9) The information processing apparatus according to (8), in which
   the judgment unit judges a demand degree of the subject on a basis of a size of the subject in the photographing content.

### Reference Signs List

1 network
10 information collection server
11 broadcast reception unit
14 program analysis unit
15, 214 keyword extraction unit
16, 215 keyword information distribution unit
17 program-related comment acquisition/distribution unit
18 program-related information acquisition/distribution unit
30, 230 user terminal
31 program-related comment
32 program-related comment posting screen
33 program-related information
40, 240 SNS server
41, 241 comment extraction unit
42, 242 post assist information generation unit
43 posted-comment DB
44, 244 image DB
50 SNS user terminal
60 television apparatus
70 information display screen
100 information collection system
210 information collection unit
211 video/audio reception unit
212 landscape analysis unit
213 various-information acquisition unit
216 landscape comment acquisition/distribution unit
217 landscape-related information acquisition/distribution unit
231 landscape-related comment
233 landscape-related information

## Claims

1. An information processing apparatus, comprising:
a reception unit that receives content;
a generation unit that analyzes the received content and generates one or more pieces of analysis information related to the content;
a judgment unit that judges an effectivity of each of the one or more pieces of generated analysis information; and
a collection unit that collects content information related to the content on a network on a basis of the analysis information judged as effective by the judgment unit.

2. The information processing apparatus according to claim 1, wherein
the judgment unit judges the effectivity on a basis of an expiration date set for each of the one or more pieces of generated analysis information.

3. The information processing apparatus according to claim 1, wherein
the judgment unit judges an importance degree of each of the one or more pieces of generated analysis information, and
the collection unit collects the content information on a basis of each of the importance degrees judged by the judgment unit.

4. The information processing apparatus according to claim 3, wherein
the content is program content,
the generation unit generates the one or more pieces of analysis information by analyzing each of a plurality of types of information included in the program content, and
the judgment unit judges the importance degree of the analysis information on a basis of the type of information to be analyzed.

5. The information processing apparatus according to claim 4, wherein
the generation unit generates one or more keywords related to the content on a basis of at least one of a telop, subtitle, audio, and image included in the program content, and
the collection unit collects the content information on a basis of the keyword judged as effective by the judgment unit.

6. The information processing apparatus according to claim 5, further comprising
a detection unit capable of detecting a scene switch in the program content,
wherein the judgment unit invalidates the keyword in a case where the scene switch is detected before reaching an expiration date set for the keyword.

7. The information processing apparatus according to claim 5, further comprising
a detection unit capable of detecting a scene switch included in the program content,
wherein the judgment unit lowers an importance degree of the keyword in a case where the scene switch is detected before reaching an expiration date set for the keyword.

8. The information processing apparatus according to claim 1, wherein
the content is photographing content photographed by an image pickup apparatus,
the generation unit analyzes the photographing content and extracts one or more subjects included in the photographing content, and
the collection unit collects subject information related to a subject judged as effective by the judgment unit.

9. The information processing apparatus according to claim 8, wherein
the judgment unit judges a demand degree of the subject on a basis of a size of the subject in the photographing content.

10. An information processing method executed by a computer, comprising:
receiving content;
analyzing the received content and generating one or more pieces of analysis information related to the content;
judging an effectivity of each of the one or more pieces of generated analysis information; and
collecting content information related to the content on a network on a basis of the analysis information judged as effective by the judgment unit.

11. A program that causes a computer to execute the steps of:
receiving content;
analyzing the received content and generating one or more pieces of analysis information related to the content;
judging an effectivity of each of the one or more pieces of generated analysis information; and
collecting content information related to the content on a network on a basis of the analysis information judged as effective by the judgment unit.
